# EUROPEAN PATENT SPECIFICATION

(11) **EP 0 620 873 B1**
(45) Date of publication and mention of the grant of the patent: **04.06.1997**
(21) Application number: 93901844.6
(22) Date of filing: 08.01.1993
(51) Int. Cl.: D03D 27/00

(54) **WRAPAROUND CLOSURE DEVICE**
UMWICKELVERSCHLIESSELEMENT
DISPOSITIF DE FERMETURE D'ELEMENTS ENVELOPPANTS

(30) Priority: 09.01.1992 US 819088; 03.08.1992 US 923866
(43) Date of publication of application: 26.10.1994
(73) Proprietor: T&N PLC, Manchester M17 1RA (GB); THE BENTLEY-HARRIS MANUFACTURING CO., Lionville, Pennsylvania 19353 (US)
(72) Inventor: ANDRIEU, Hubert, F-60800 Crépy-en-Valois (FR); CAUDRON, Daniel G., F-60800 Crépy-en-Valois (FR); GLADFELTER, Harry F., Phoenixville, PA 19460 (US); TRESSLAR, Marie C., Jeffersonville, PA 19403 (US); FORD, Michael A., West Chester, PA 19380 (US); VAN WASSENHOVE, Denis H. T., F-60800 Crépy-en-Valois (FR)
(74) Representative: Crux, John Anthony
(86) International application number: PCT/GB93/00022
(87) International publication number: WO 93/14253

(56) References cited:
- DE-A- 2 506 147
- US-A- 4 281 211
- US-A- 4 791 236

## Description

### Field of Invention

This invention relates to wraparound fabric sleeves of interlaced fibrous materials, the sleeves being preferably formed by a weaving process. More particularly, the invention relates to wraparound sleeves having a closure device and even more specifically to wraparound sleeves for the protection of elongated articles, such as cables wherein the sleeves are intended to provide protection from the effects of abrasion or heat as well as to maintain the elongated articles in a neatly bundled arrangement so that they are not damaged by moving machinery parts or the like.

### Background of the Invention

The use of flexible sleeves for the protection of cables, hoses and other elongated articles for the purposes above noted is well known. In addition, it is well known to secure the marginal edges of the sleeving material together by means of zipper type fastener elements. A product for this purpose is a sleeve formed of braided monofilament secured together by a zipper type fastener element. Such sleeving is sold by The Bentley-Harris Manufacturing Company under the trademark EXPANDO ZIP and is widely used in automotive as well as other applications, for example, for bundling cables and hose and the like in an automobile or truck engine compartment. Other types of sleeving available from The Bentley-Harris Manufacturing Company are woven, knitted or braided from materials such as monofilaments of engineered plastic materials, glass fibre, wire and bulky yarns and combinations thereof, depending upon the requirements of the particular application. In addition, other means of fastening sleeves of the type disclosed are known in the art. In addition to the use of zipper type fasteners, these include tongue and groove type elongated flexible plastic fasteners, VELCRO™ hook and loop brand type tapes exposed along the marginal edges of the sleeving material (known from US-A-4791236), tape wraps and wire or tape ties. Despite the availability of the foregoing, the need exists for a simply reliable, relatively low cost system, for closure of a sleeve which will accommodate variations in the diameter of a bundle of elongated articles, such as cables having connectors intermediate their length, while allowing for cable breakouts at points where a cable is required to be connected to a particular instrument or item of equipment.

### Summary and Objects of the Invention

In accordance with one embodiment of the invention, a ribbon or a web for the formation of a wraparound sleeve for protecting elongated articles, said web being comprised of a monofilament material and provided with an array of individual hook type fastener means disposed along one marginal edge is characterised in that a bulky multifilament yarn is interlaced with said monofilament material, said bulky multifilament yarn having portions exposed on the surface of said web in spaced relationship to said hook type fastener elements, said hook type fastener means including hook type fastener elements interengageable with the filaments of said bulky multifilament yarn to secure said web in surrounding relationship to said elongated articles. Advantageously, the hook type fasteners are provided as a tape of the kind sold under the trademark VELCRO. The tape is sewn or adhesively bonded to the web along the edge thereof with the hook elements facing generally inwardly. Alternatively and advantageously, the individual monofilaments comprising the sleeve may be directly formed into individual hook elements for interengagement with the bulky yarn.

In another form of the invention, the sleeving material is formed of woven monofilaments with at least one band or row of bulky multifilament warp yarn interwoven along at least one marginal edge of the sleeve, each said row comprising one or a plurality of bulky multifilament yarns. In yet another form of the invention, additional rows of bulky multifilament yarns are provided at spaced locations intermediate the marginal edges to allow for interengagement of the hooks with a select row of yarn according to the diameter of the articles being protected.

In accordance with still anther form of the invention, a ribbon or web of sleeving material is provided, the sleeving material being comprised of monofilament warps and bulky multifilament yarn as the fill (weft) material. According to the invention, the bulky multifilament yarn is exposed and relatively unconfined on both the inner and the outer surface in a band extending along one marginal edge of the fabric by decreasing the density of the warp monofilaments, and a multiplicity of hook type fastener elements extend along the opposite marginal edge of the web. The hook type fastener elements penetrate and interengage with the fibres of the bulky yarn for closure of the sleeve around the elongated articles. Advantageously, the hook type fasteners are provided as a tape of the kind sold under the trademark VELCRO. The tape is typically sewn or adhesively bonded to the web along the edge thereof with the hook elements facing generally outwardly from the surface of the tape and thus from the surface of the fabric into which the tape is secure.

In this form of the invention, the sleeving is woven of warp monofilaments and bulky multifilament yarn in the fill direction interwoven with relatively large multifilament yarn loops exposed and relatively unconfined along at least one marginal edge of the sleeve. More preferably, the monofilament warps in the region of the marginal edge are spaced relatively far apart to maximise exposure and to allow for separation of the filaments of the bulky fill yarns. By orientating the bulky yarn so that the individual yarn filaments extend horizontally, it has been found that the hooks more readily penetrate the yarn and hook under groups or subgroups of the horizontally extending filamentary material of which the yarn is comprised. By use of this arrangement, highly effective and efficient adherence of the hooks of the hook type fastener tape to the yarns within the band is achieved.

In accordance with the foregoing, important objectives of the present invention include the following:
the provision of a wraparound sleeve with fastening means formed integrally of the wraparound sleeve material;
the provision of a wraparound sleeve with fastening means comprised of hook tape disposed to interengage with filaments or groups of filaments of interwoven bulky multifilament fill yarn exposed along a marginal edge of the sleeve material;
the provision of fastening means for a wraparound sleeve which eliminates the need to tape or tie it together;
the provision of a fastening means for a wraparound sleeve which readily accommodates breakouts with substantially no tendency of the joined sleeve edges to separate; and
the provision of a fastening means for wraparound sleeve which eliminates the need for a special tool for fastening the sleeve edges together.

A still further objective of the invention is the provision of a wraparound sleeve having fastening means which accommodates considerable variation in the overall size of the elongated article or articles being protected.

A still further objective of the invention is the provision of a wraparound sleeve having fastening means which allows for considerable variation in the overall size of the elongated article or articles being protected.

A still further objective of the invention is the provision of a wraparound sleeve material which can be conveniently supplied to the end user in rolls wherein the fastener means serve to hold the web of material in rolled up form until required for use.

The foregoing as well as other objectives and advantages of the invention will become apparent from the following detailed description of preferred embodiments of the invention.

### Detailed Description of the Drawings

Figure 1 is a schematic view showing a wraparound sleeve having interengageable fastener elements formed according to the present invention;
Figure 2 is a view of the wraparound sleeve of Figure 1 showing the fastener elements interengaged;
Figure 3 is a fragmentary view showing a modified form of the invention of Figure 1;
Figure 4 is a view similar to Figure 3 showing a further alternative of the invention;
Figure 5 illustrates a still further alternative of the invention;
Figure 6 illustrates a supply of sleeving in rolled up form ready for installation;
Figure 7 illustrates a further alternative of the present invention;
Figure 8 illustrates the sleeving of Figure 7 illustrating a cable breakout with the sleeving of Figure 7;
Figure 9 is a view similar to Figure 1 illustrating a woven monofilament sleeve incorporating the principles of the invention;
Figure 10 is a view showing a wraparound sleeve material having bands of interengageable fastener elements and bulky monofilament yarn disposed in the fill direction in accordance with another embodiment of the invention;
Figure 11 is a view of the reverse side of the sleeve material of Figure 10.
Figure 12 is a fragmentary schematic view on an enlarged scale illustrating more particularly the sleeve material of Figures 10 and 11; and
Figure 13 is a view of the sleeve of Figures 10-12 showing the sleeve wrapped around a bundle of elongated substrates and the fastener elements partially interengaged.

### Detailed Description of Preferred Embodiments of the Invention

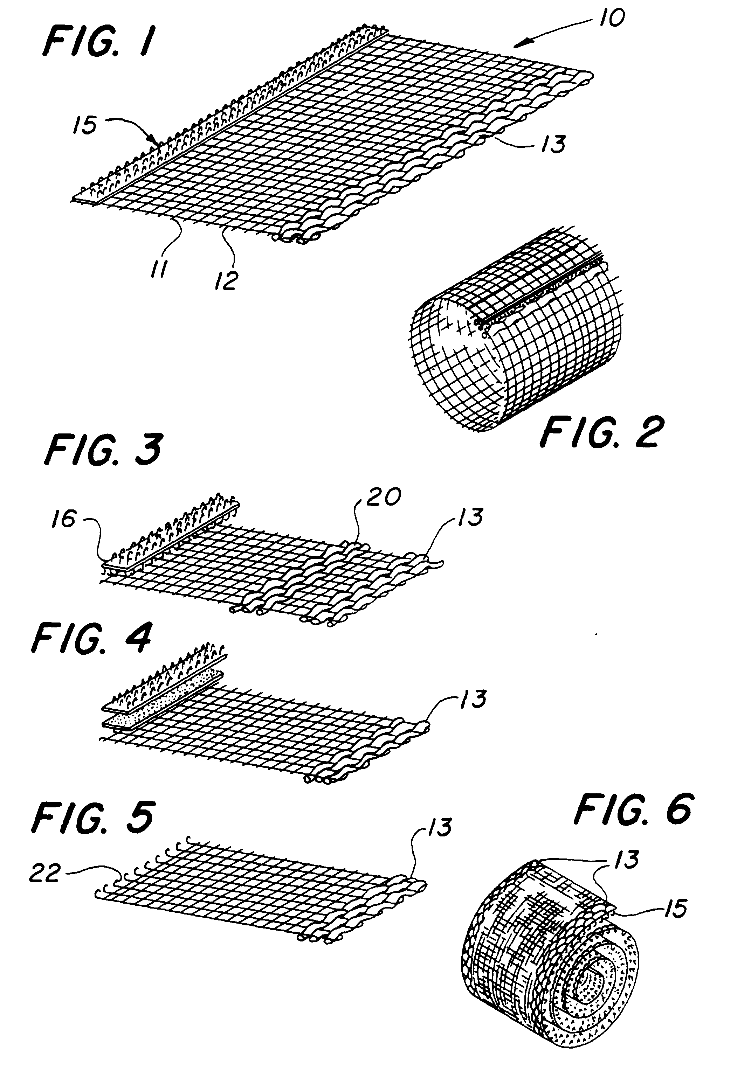

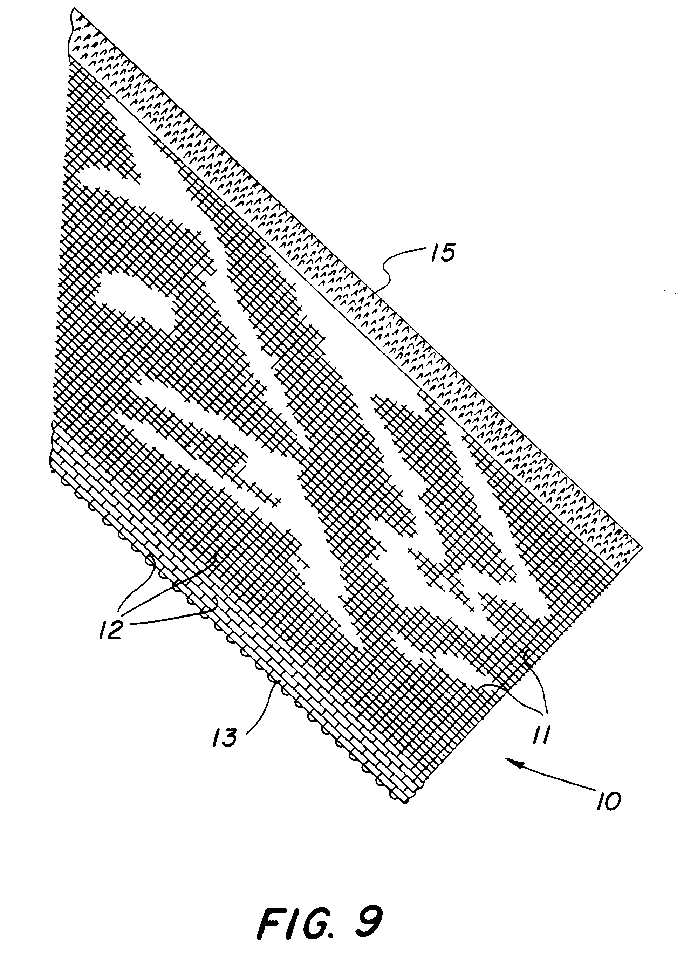

Referring to Figures 1 and 9, a sleeving material 10 comprised of interlaced warp and weft monofilaments 11 and 12 is disclosed. Typically, the monofilaments are formed of an engineered plastic material. Preferably, the monofilament used is polyester, which is economical, has good durability and is relatively abrasion resistant, but it will be appreciated that other members of the family of plastics known as engineered plastics are suitable for use in sleeves formed according to the present invention.

Materials in the family of engineered plastics of the type referred to herein include plastics that have a tensile modulus of greater than 50,000 psi and in the range from about 50,000 to about 200,000. Examples of engineered plastics are olefin polymers of which are poly 4-methyl pentene and fluorinated polyolefins, ethylenetetrafluorethylene copolymers and vinylidene fluoride polymers, especially polyvinylidene fluoride and blends thereof, for example, the fluorinated olefin blends as described and claimed in British Patent No 1,120,131, polyesters, for example, polyethylene tetraphthalate, polytetramethylene terephthalate for example that are treated as described in US Patent Nos 3,968,015; 4,073,830 and 4,113,594, polyphenyleneoxide and -sulphide, blends of polyethylene oxide with styrene, silicone carbonate block copolymers, polyketones, such as polyarylether ketones, for example, those described and claims in US Patent Nos 3,953,400; 4,024,314; 4,229,564; 3,751,398; 3,914,298; 3,956,146 and 4,111,908 and in British Patent Nos 1,387,303 and 1,383,393, polysulphones, for example, polyaryl sulphones, polyarylether sulphones, polyetherimides, for example those described in US Patent No 3,847,867, polycarbonate, especially those derived from bis phenol-A, polyamides, especially those described and claimed in US Patent Nos 3,551,200, 3,677,921 and in British Patent No 1,287,932, poly ether ether ketone (peek), epoxy resins and blends of one or more of the above-mentioned polymeric materials either with each other or with other polymeric materials. A more detailed discussion of the above materials is found in British Specification No 1,529,351 which is incorporated herein by reference. It is especially preferred to use polyester as the monofilament material as polyester is relatively inexpensive and sufficiently impervious to the changes in temperature found for most automotive applications.

According to the invention, it is contemplated that the sleeves are made from fabric in ribbon or web form by shuttle loom, needle loom, scrim, fused lattice or braiding techniques. In addition, the objectives of the invention may be accomplished by knitting, braiding or weaving articles in tubular form and thereafter cutting the tube longitudinally so as to form a web of material which can be used for manufacturing a sleeve.

A first preferred form of the invention utilizes sleeving material in woven form as best illustrated in Figures 1 and 9. Although the invention is illustrated in the production of sleeves having an open construction, which allows for good air circulation, certain application of sleeves formed according to the invention as, for example, where insulating capability is required, will be formed utilizing a substantially closed construction. As is illustrated in Figure 9, a typical construction is comprised of single monofilament warps and monofilament weft. The monofilaments range in diameter from about 8 to 15 mils for typical automotive applications.

With reference to Figures 1 and 2, where a woven sleeve is disclosed, one longitudinal edge is provided with woven bulky monofilament yarn 13 interlaced with the weft monofilaments. Preferably, a plurality of multifilament yarns constitute a single band or row extending inwardly from the marginal edge. Each multifilament band or row may advantageously comprise 3 to 5 bulky multifilament yarns. As illustrated in Figure 9, five multifilament yarns are woven in a band approximately 3/8" wide in place of the monofilament warp. The arrangement results in the exposure of the multifilament warp yarns on both sleeve surfaces which is of advantage for reasons which will become apparent from the following description.

Preferably, as best seen in Figures 1 and 9, hook means which may advantageously be in the form of VELCRO^{TM} hook tape 15 is secured along the marginal edge opposite to the edge having the woven multifilaments. As indicated in Figure 1, the VELCRO^{TM} hook tape 15 may be sewn or adhesively secured directly to the monofilament web. Alternatively, multifilament warp yarns may be woven into each marginal edge in the form of bands or rows, and as shown in Figure 3, VELCRO^{TM} hook tape having hooks on both surfaces as illustrated at 16 may then be applied with the VELCRO^{TM} hooks on the lower surface of the tape securing directly to the band of multifilament warp yarns adjacent one of the marginal edges.

Alternatively, an interlayer of tape 18 may be provided between the band of multifilament warp yarns and the VELCRO^{TM} hook tape, as is illustrated in Figure 4. In this embodiment, the VELCRO^{TM} hook tape is advantageously adhesively secured to the intermediate tape layer.

If desired, additional bands or rows of multifilament warp yarns may be interwoven into the sleeving material, as is illustrated at 20 in Figure 3, either as replacements for the monofilament warp or in bands between the monofilament warp. The use of a plurality of bands of multifilament yarn allows for variation in the overlap of the sleeving material so that variations in the sizes of the substrates being protected can be accommodated.

Figure 5 illustrates a further embodiment of the present invention. According to Figure 5, the ends of the weft monofilaments are first cut and then crimped or bent and heat set into a hook shaped form as at 22 thereby eliminating the need for the separate step of application of the VELCRO^{TM} hook tape. Conventional machinery for forming polyester and the like kinds of monofilament into hook type fastening elements may be used for the fabrication of hooks along one marginal edge of the product.

Various advantages are realised through the use of bulky monofilament yarn extended along the same edge of the web as the hook shaped fastener elements when the multifilament yarn is interwoven or interlaced into the web. An advantage of this can be seen upon reference to Figure 6 which shows the sleeving material in rolled up form ready for use. As illustrated in Figure 6, when the material is rolled up, the VELCRO^{TM} hooks on one side of the web interengage with the bulky multifilament yarn surface exposed on the other side of the web, thereby yieldably holding the web in the rolled up form except when the web is deliberately unwrapped. This feature maintains the roll in compact form and allows for the installer to unwrap only that amount of web material actually required for use whilst maintained the unused web in compactly wrapped up form. Another advantage of providing the interlaced multifilament warp yarn is that the sleeving may be fastened alternatively in the overlapping relationship shown in Figure 2 wherein an inside surface on one edge of the sleeve is overlapped with the outside surface on one edge of the sleeve as is shown in Figure 2.

However, in some applications it may be of advantage to close the sleeve with both inside surfaces interengaged by the fastening means so that the sleeve in cross-section has a "tadpole" shape. Either arrangement may be conveniently utilized with these embodiments of the present invention.

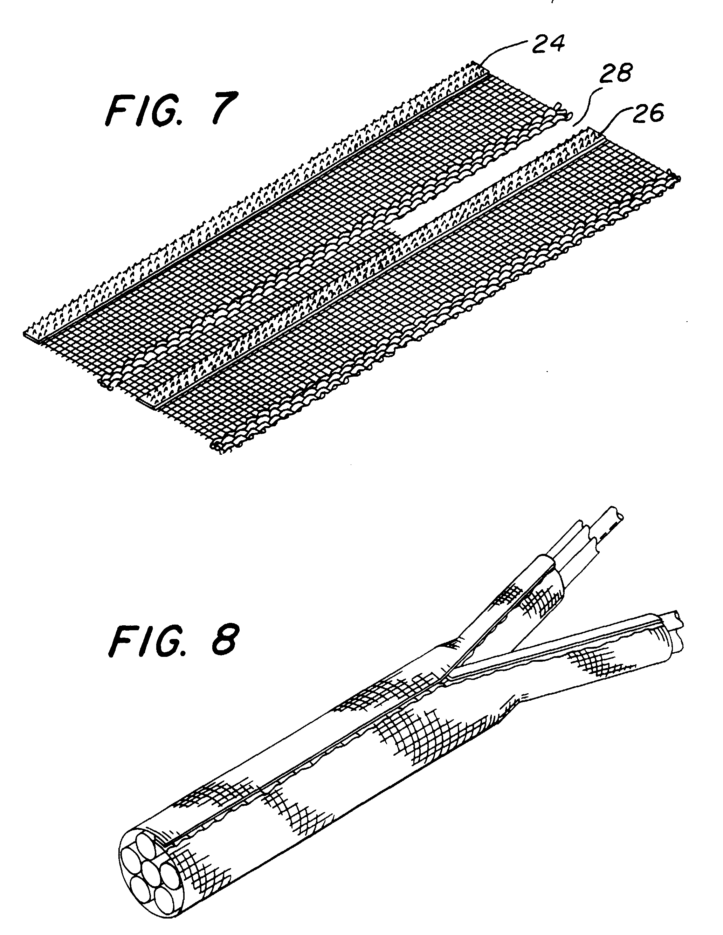

Referring now to Figures 7 and 8, there is illustrated sleeving similar to Figure 1 with interwoven warp yarns along one marginal edge of the sleeving and an additional two rows of warp yarns spaced intermediate to the two marginal edges. Alternate rows shown at 24 and 26 are provided with VELCRO^{TM} hook tape bonded thereto.

Utilizing the tape configuration of Figure 7, the two marginal edges may be separated as required by cutting the web between the intermediate rows with a heat gun to the point where a cable breakout is required, as is shown by the reference character 28. The wraparound sleeving of Figure 7 is shown as installed to accommodate a breakout in Figure 8.

The characteristics of the multifilament yarn may vary widely and still accomplish the objectives of the present invention. Yarns formed of polypropylene of a cotton count of 1.1s have proven to be particularly effective in applications where VELCRO^{TM} hook tape is employed. In general, the VELCRO^{TM} hook tape adheres more readily and firmly to the yarn as the yarn becomes more bulky. The effectiveness of any particular yarn may be readily determined by a few field trials.

In use in braiding sleeving, additional multifilament warp yarns are provided in addition to the braided monofilaments. Braided sleeving may be formed on a circular braider and subsequently split lengthwise or flat braiding techniques may be employed.

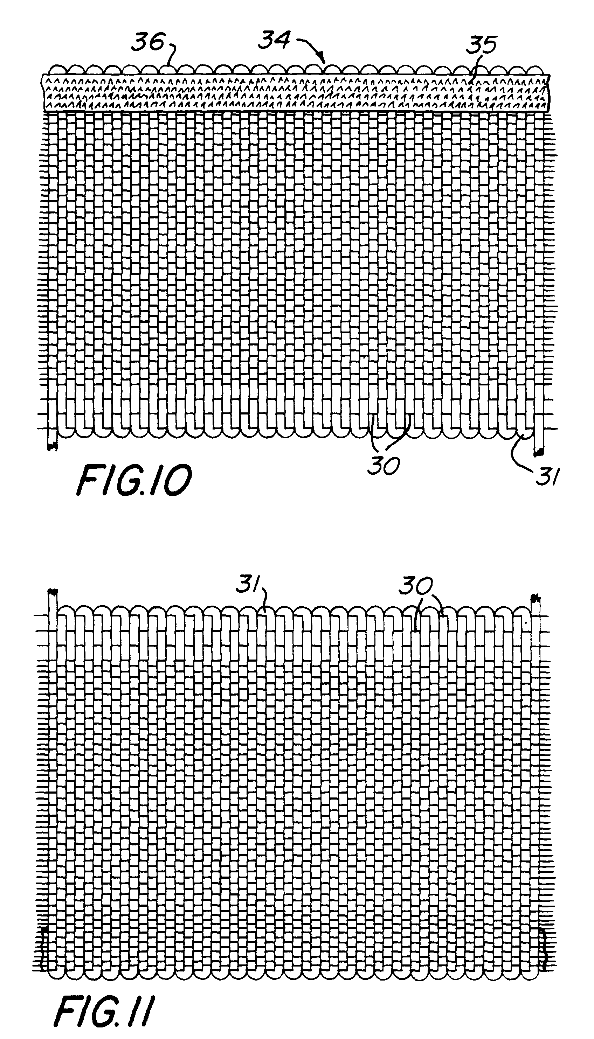

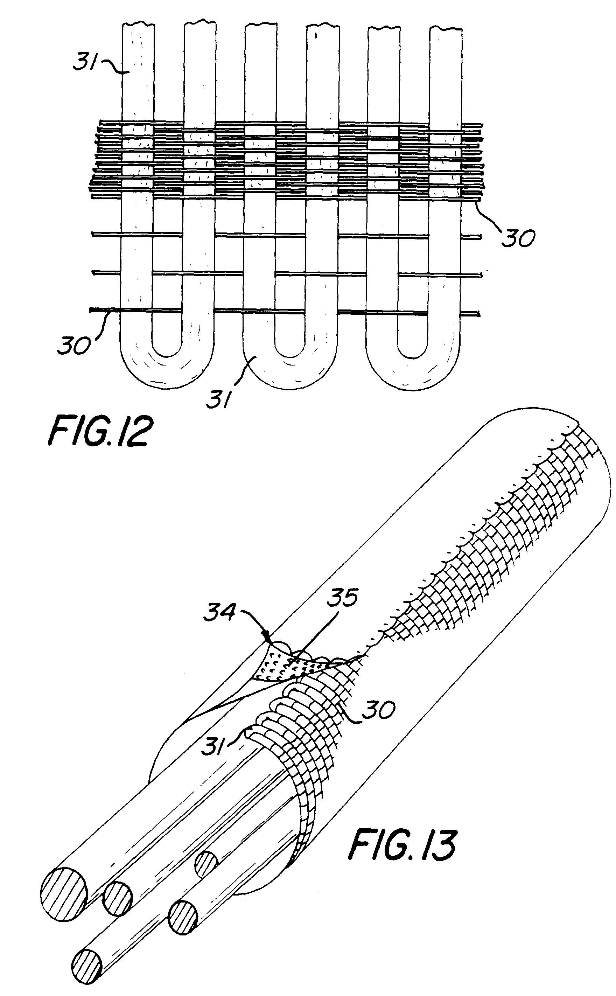

Referring now to Figures 10 and 11, there is illustrated a further preferred form of woven fabric sleeve material of the kind incorporating the features of the present invention.

As best illustrated in Figures 10 and 11, the sleeve material is comprised of monofilament warp yarns 30 which are formed of polyester or other suitable material, preferably selected from the family of materials commonly referred to above as engineered plastics.

Interlaced with the warp monofilament, as best illustrated in Figure 10, are strands of relatively bulky multifilament yarn 31 extending in the fill (weft) direction. The multifilament yarn may take various forms and be comprised of a variety of materials. The use of yarns having a denier of about 600-2500 and having about 70-450 filaments is considered to be within the scope of the invention. As illustrated, multifilament yarn comprised of 192 individual filaments and having a denier of 1300 has been employed and has been found to produce extremely effective results, As is seen in Figures 10 and 11 and also in the schematic view of Figure 12, the sleeve material of the present invention is of relatively closed construction, there being about 40 monofilaments per inch, although the density of the monofilaments may be varied to provide a denser or a more open construction in accordance with various product applications without departing from the teachings of the invention.

As is best seen in Figure 10-12, the bulky multifilament fill yarn is relatively exposed and unconfined along one edge of the sleeve by reducing the density of the monofilaments in a band of predetermined width extending inwardly from the marginal edge of the material. Most preferably, the individual filaments in the loops of bulky yarn at the extreme marginal edge of the sleeve are not restricted or confined, and have a tendency to readily separate individually and in small bundles or subgroups. In this embodiment, monofilament density in the band adjacent to the marginal edge is about eight monofilaments per inch in a band about ½ inch wide.

Preferably, as best seen in Figures 10 and 13, hook means which are in the form of hook type tape of the general type sold under the trademark VELCRO shown at 34 is secured along the opposite marginal edge of the sleeve material. This material comprises a flexible fabric tape material having small hook like elements formed of polyester or the like projecting from the fabric surface as can be seen at 35 in Figure 13. This tape material is readily available and is generally characterised as having transversely extending rows of hooks, the ends of which are bent over in planes extending generally lengthwise of the tape. The hook tape may be sewn or otherwise secured directly, to the web material. Preferably, and in contrast to the opposite marginal edge, the multifilament yarn exposed along the marginal edge beyond the limits of the hook type tape is held tightly closed by knitting as shown at 36 in Figure 10 so as to constrain the loops along this edge. The hook tape and the band of exposed bulky yarn should be of about the same width so as to maximise the interengagement of the hooks with the yarn filaments. Where variations in the diameter of the bundle of elongated elements are to be accommodated by the band of exposed bulky yarn may be somewhat wider than the band of hook tape.

In use, the web of sleeving material is placed around a group of cables to be bundled and the hook elements along one edge of the web pressed into the bulky yarn along the opposite edge. Since the bulky yarn is exposed on both surfaces of the web, closure may be effected with the edges overlapping as in Figure 13 or in a tadpole configuration if desired.

It has been found that the individual hooks of the hook type tape readily penetrate the exposed bulky yarn in the band along the opposite edge of the web. In as much as the hook type tape is formed with the ends of the hooks extending generally lengthwise of the tape and since the fibres of the bulky yarn are extending generally transversely of the hook ends, the hooks under individual filaments or bundles of filaments allow for more aggressive hooking action. Although effective sleeve closures are provided with the embodiment of Figures 1-9, even better hooking action is achieved when the hook type elements are disposed for interengagement with the horizontally disposed filaments of the bulky fill yarn as in the present invention.

In the practice of the invention using this embodiment, it has been found that the more often the hook type elements are pressed into the bulky yarn, the more effective the bond becomes. This is believed to be due to the opening up of the yarn or pulling apart of the yarn filaments due to the adherence of the hook type elements to the individual filaments and due to the fact that the horizontal disposition of the filaments seems to both facilitate separation of the yarn filaments as the hook are pressed against them and to promote a hooking action in which the individual hooks interlock with the filaments.

With all embodiments, the characteristics of one multifilament yarn may be varied substantially without departing from the teachings of the present invention. In general, more adherence is achieved between the hooks and the individual filaments of yarn as the yarn becomes more bulky and as more yarn surface area is exposed along the marginal edge.

Sleeves formed in accordance with the present invention are particularly effective for bundling cables where cable break out at locations intermediate the ends of a section of sleeve are desired.

Sleeves according to the invention are relatively inexpensive to fabricate. The closure means provided resists separation under conditions of stress and vibration, making the sleeves suitable for automotive applications as well as for applications in other forms of moving machinery where it is necessary to bundle cables and other elongated flexible articles.

## Claims

1. A web (10) for the formation of a wraparound sleeve for protecting elongated articles, said web being comprised of a monofilament material (11, 12) and provided with an array of individual hook type fastener means (15) disposed along one marginal edge; characterised in that a bulky multifilament yarn (13) is interlaced with said monofilament material, said bulky multifilament yarn having portions exposed on the surface of said web in spaced relationship to said hook type fastener elements (15), said hook type fastener means including hook type fastener elements interengageable with the filaments of said bulky multifilament yarn (13) to secure said web in surrounding relationship to said elongated articles.

2. A web according to claim 1 characterised in that said bulky multifilament warp yarn (13) is exposed on the inner and the outer surface of said sleeve for joinder by the hook type fastener means alternatively with the inner web surface or with the outer web surface.

3. A web according to claim 1 characterised in that said hook type fastener means (15) comprises fastener hook tape (16) secured along said one marginal edge of said web.

4. A web according to claim 3 further characterised by the inclusion of a row of bulky warp yarn (13) interlaced with said monofilament ends (11, 12) along the first marginal edge with the yarn surface exposed on the surface opposite to the surface carrying the fastener hook tape.

5. A web according to claim 4 characterised in that said row of bulky warp yarn comprises a plurality of individual multifilament warp yarns.

6. A web according to claim 5 further characterised by the inclusion of at least one additional row of multifilament warp yarn (20) spaced inwardly from said first named row of multifilament warp yarns (13).

7. A web according to claim 2 further characterised by the inclusion of at least one row of bulky monofilament warp yarns spaced inwardly from the bulky monofilament warp yarn interlaced along said second marginal edge.

8. A web according to claim 7 wherein said web is a braided web.

9. A web according to claim 7 wherein said sleeve is a knitted web.

10. A web according to claim 7 wherein said web is a woven web.

11. A web according to claim 1 characterised in that said web is a woven web having monofilament weft, the hook type fastener means comprising hooks (22) formed integrally with the ends of the monofilament weft yarns exposed at the first marginal edge of the web.

12. A web according to claim 4, characterised in that said web is wound into a roll form, the fastener means of said fastener hook tape and the said yarn surface along saied first marginal edge being relatively positioned for interengagement whereby the web resists unrolling.

13. A web according to any of claims 1 to 12 in the form of a sleeve for the protection of elongated substrates, wherein said sleeve is comprised of interlaced filamentary material and is characterised in that one marginal edge is comprised of a band of bulky multifilament warp yarn (13) exposed on both the inner and the outer surface of said sleeve and hook type fasteners (15, 16, 22) extending along the opposite marginal edge of said sleeve, said hook type fasteners being interengageable with the bulky yarn (13) for closure of the sleeve around the elongated substrates.

14. A web in the form of a sleeve according to claim 13, characterised in that said sleeve has a second band of bulky yarn extended on the marginal edge having said hook type fasteners on the surface of the sleeve opposite to the surface having the fasteners, the sleeve being wound into a compact roll form with the hook type fasteners (15) and bulky yarn (13) yieldably holding the sleeve in said roll form.

15. A web according to claim 1 characterised in that said bulky multifilament yarn extends in the fill (weft) direction.

16. A web according to claim 1 characterised in that said bulky multifilament warp yarn is exposed in a band extending lengthwise yarn of said second marginal edge on the inner and the outer surface of said sleeve for joinder by the hook type fastener means alternatively with the inner web surface or the outer web surface.

17. A web according to claim 16 characterised in that said hook type fastener means comprises fastener hook tape secured along said first marginal edge.

18. A web according to claim 15 in the form of a sleeve for the protection of elongated substrates, said sleeve comprising interlaced filamentary material, including bulky multifilament yarn in the fill (weft) direction characterised in that said bulky multifilament yarn is relatively exposed and unrestrained in a first band extending along one marginal edge of said sleeve; a band of hook type fastener tape extending along the opposite marginal edge thereof, said hook type fastener tape having an array of individual hook elements projecting away from the surface of the sleeve; said hook elements being interengageable with the filaments of said bulky yarn for closure of the sleeve around the elongated substrates.

19. A woven web in the form of a sleeve according to claim 18 characterised in that the sleeve is woven.

20. A woven sleeve according to claim 19 characterised in that said filamentary material comprises monofilament warp yarns interlaced with said bulky multifilament yarn.

21. A woven sleeve according to claim 20 characterised in that the density of the monofilament warp yarns adjacent said one marginal edge is substantially less than the density outside of the first band.

22. A woven sleeve according to claim 21 characterised in that the monofilament warp yarns have a diameter of about 8 to about 15 mils and said bulky yarn has a denier of about 600-2500 and is comprised of about 70 to 450 filaments.

23. A web according to claim 18 characterised in that said sleeve is a knitted web.

## Patentansprüche

1. Bahn (10) für die Bildung einer Umwickelhülse zum Schützen von langgestreckten Gegenständen, wobei die Bahn gebildet ist aus einem Monofilamentmaterial (11, 12) und mit einem Feld von einzelnen hakenartigen Befestigungseinrichtungen (15) versehen ist, angeordnet längs einer Randkante; dadurch gekennzeichnet, daß ein voluminöses Multifilamentgarn (13) verschachtelt ist mit dem Monofilamentmaterial, wobei das voluminöse Multifilamentgarn Abschnitte hat, die auf der Oberfläche der Bahn in beabstandeter Beziehung zu den hakenartigen Befestigungselementen (15) freigelegt sind, wobei die hakenartigen Befestigungseinrichtungen hakenartige Befestigungselemente aufweisen, die in Eingriff stellbar sind mit den Filamenten des voluminösen Multifilamentgarns (13), um die Bahn in umgebender Beziehung zu den langgestreckten Gegenständen zu befestigen.

2. Bahn gemäß Anspruch 1, dadurch gekennzeichnet, daß das voluminöse Multifilament-Kettgarn (13) freigelegt ist auf der Innen- und Außenfläche der Hülse zur Verbindung durch die hakenartigen Befestigungseinrichtungen alternativ mit der inneren Bahnfläche oder der äußeren Bahnfläche.

3. Bahn gemäß Anspruch 1, dadurch gekennzeichnet, daß die hakenartigen Befestigungseinrichtungen (15) ein Befestigungshaken-Band (16) aufweisen, das längs der einen Randkante der Bahn befestigt ist.

4. Bahn gemäß Anspruch 3, ferner gekennzeichnet durch den Einschluß einer Reihe von voluminösem Kettgarn (13), das verschachtelt ist mit den Monofilamentenden (11, 12) längs der ersten Randkante, wobei die Garnoberfläche freigelegt ist auf der Oberfläche, welche der das Befestigungshaken-Band tragenden Oberfläche gegenüberliegt.

5. Bahn gemäß Anspruch 4, dadurch gekennzeichnet, daß die Reihe von voluminösem Kettgarn eine Vielzahl von einzelnen Multifilament-Kettgarnen aufweist.

6. Bahn gemäß Anspruch 5, ferner gekennzeichnet durch den Einschluß wenigstens einer zusätzlichen Reihe von Multifilament-Kettgarnen (20), das nach innen von der erstgenannten Reihe von Multifilament-Kettgarnen (13) beabstandet ist.

7. Bahn gemäß Anspruch 2, ferner gekennzeichnet durch den Einschluß wenigstens einer Reihe von voluminösen Multifilament-Kettgarnen, die nach innen von dem voluminösen Monofilament-Kettgarn beabstandet sind, verschachtelt längs der zweiten Randkante.

8. Bahn nach Anspruch 7, wobei die Bahn eine geflochtene Bahn ist.

9. Bahn gemäß Anspruch 7, wobei die Hülse ein Gewirke ist.

10. Bahn gemäß Anspruch 7, wobei die Bahn eine gewobene Bahn ist.

11. Bahn gemäß Anspruch 1, dadurch gekennzeichnet, daß die Bahn eine gewebte Bahn ist mit einem Monofilament-Schußfaden, wobei die hakenartigen Befestigungseinrichtungen Haken (22) aufweisen; die einstückig bzw. integral gebildet sind, wobei die Enden der Monofilament-Schußgarne an der ersten Randkante der Bahn freiliegen.

12. Bahn gemäß Anspruch 4, dadurch gekennzeichnet, daß die Bahn in einer Rollenform gewickelt ist, wobei die Befestigungseinrichtungen des Befestigungshaken-Bandes und die Garnfläche längs der ersten Randkante relativ positioniert sind zum Eingriff dazwischen, wodurch die Bahn der Abwicklung widersteht.

13. Bahn gemäß einem der Ansprüche 1 bis 12 in der Form einer Hülse für den Schutz von langgestreckten Substraten, wobei die Hülse gebildet ist aus verschachteltem Filamentmaterial und gekennzeichnet ist dadurch, daß eine Randkante gebildet ist aus einem Band von voluminösem Multifilament-Kettgarn (13), freigelegt sowohl auf der Innen- als auch der Aussenfläche der Hülse, wobei hakenartige Befestigungselemente (15, 16, 22) sich längs der gegenüberliegenden Randkante der Hülse erstrecken, wobei die hakenartigen Befestigungselemente in Eingriff stellbar sind mit dem voluminösen Garn (13) zum Verschluß der Hülse um die langgestreckten Substrate.

14. Bahn in der Form einer Hülse gemäß Anspruch 13, dadurch gekennzeichnet, daß die Hülse ein zweites Band von voluminösem Garn hat, das auf der Randkante erstreckt ist mit den hakenartigen Befestigungselementen auf der Oberfläche der Hülse gegenüber der Oberfläche, welche die Befestigungselemente hat, wobei die Hülse gewickelt ist in eine kompakte Rollenform, wobei die hakenartigen Befestigungselemente (15) und das voluminöse Garn (13) die Hülse wirksam in der Rollenform halten.

15. Bahn gemäß Anspruch 1, dadurch gekennzeichnet, daß das voluminöse Multifilamentgarn sich in der Füll(Schuß)-Richtung erstreckt.

16. Bahn gemäß Anspruch 1, dadurch gekennzeichnet, daß das voluminöse Multifilament-Kettgarn freigelegt ist in einem sich in einem längsweise erstreckenden Band angeordneten Garn der zweiten Randkante auf der Innen- und Außenfläche der Hülse zur Verbindung durch die hakenartigen Befestigungseinrichtungen, alternativ mit der inneren Bahnfläche oder der äußeren Bahnfläche.

17. Bahn nach Anspruch 16, dadurch gekennzeichnet, daß die hakenartige Befestigungseinrichtung ein Befestigungshaken-Band aufweist, das längs der ersten Randkante befestigt ist.

18. Bahn gemäß Anspruch 15 in der Form einer Hülse für den Schutz von langgestreckten Substraten, wobei die Hülse ein verschachteltes Filamentmaterial aufweist, das ein voluminöses Multifilamentgarn in der Füll(Schuß)-Richtung aufweist, dadurch gekennzeichnet, daß das voluminöse Multifilamentgarn relativ freigelegt und unbegrenzt in einem ersten Band ist, das sich längs einer Randkante der Hülse erstreckt; wobei ein Band des hakenartigen Befestigungsbandes sich längs der gegenüberliegenden Randkante davon erstreckt, wobei das hakenartige Befestigungsband ein Feld von einzelnen Hakenelementen hat, die von der Oberfläche der Hülse weg vorspringen, wobei die Hakenelemente in Eingriff stellbar sind mit den Filamenten des voluminösen Garns für den Verschluß der Hülse um die langgestreckten Substrate.

19. Gewebte Bahn in der Form einer Hülse gemäß Anspruch 18, dadurch gekennzeichnet, daß die Hülse gewebt ist.

20. Gewebte Hülse gemäß Anspruch 19, dadurch gekennzeichnet, daß das Filamentmaterial Monofilamente-Kettgarne aufweist, die mit dem voluminösen Multifilamentgarn verschachtelt sind.

21. Gewebte Hülse gemäß Anspruch 20, dadurch gekennzeichnet, daß die Dichte der Monofilament-Kettgarne benachbart der einen Randkante wesentlich kleiner ist als die Dichte außerhalb des ersten Bandes.

22. Gewebte Hülse gemäß Anspruch 21, dadurch gekennzeichnet, daß die Monofilament-Kettgarne einen Durchmesser von etwa 8 bis etwa 15 Milliinch, und das voluminöse Garn hat ein Denier von etwa 600 bis 2500 hat, und gebildet ist aus etwa 70 bis 450 Filamenten.

23. Bahn gemäß Anspruch 18, dadurch gekennzeichnet, daß die Hülse eine gewirkte bzw. gestrickte Bahn ist.

## Revendications

1. Bande (10) pour la formation d'un manchon enveloppant pour protéger des articles allongés, ladite bande étant faite d'un matériau monofilament (11, 12) et dotée d'un ensemble de moyens de fixation du type crochets individuels (15) disposés le long d'un bord marginal; caractérisée en ce qu'un gros fil multifilament (13) est entrelacé avec ledit matériau monofilament, ledit gros fil multifilament comportant des portions exposées sur la surface de ladite bande qui sont espacées desdits moyens de fixation du type crochets (15), lesdits moyens de fixation du type crochets comprenant des éléments de fixation du type crochets pouvant être engagés avec les filaments dudit gros fil multifilament (13) afin de fixer ladite bande autour desdits articles allongés.

2. Bande selon la revendication 1, caractérisée en ce que ledit gros fil de chaîne multifilament (13) est exposé sur la surface interne et la surface externe dudit manchon pour attachement par les moyens de fixation du type crochets alternativement avec la surface interne de la bande ou avec la surface externe de la bande.

3. Bande selon la revendication 1, caractérisée en ce que lesdits moyens de fixation du type crochets (15) comprennent un ruban à crochets de fixation (16) fixé le long dudit bord marginal de ladite bande.

4. Bande selon la revendication 3, caractérisée en outre par l'insertion d'une rangée de gros fil de chaîne (13) entrelacé avec lesdites extrémités de matériau monofilament (11, 12) le long du premier bord marginal avec la surface du fil exposée sur la surface à l'opposé de la surface portant le ruban à crochets de fixation.

5. Bande selon la revendication 4, caractérisée en ce que ladite rangée de gros fil de chaîne comprend une pluralité de fils de chaîne multifilaments individuels.

6. Bande selon la revendication 5, caractérisée en outre par l'insertion d'au moins une rangée supplémentaire de fils de chaîne multifilaments (20) espacée vers l'intérieur de ladite première rangée de fils de chaîne multifilaments (13).

7. Bande selon la revendication 2, caractérisée en outre par l'insertion d'au moins une rangée de gros fils de chaîne monofilaments espacée vers l'intérieur du gros fil de chaîne monofilament entrelacé le long dudit second bord marginal.

8. Bande selon la revendication 7, dans laquelle ladite bande est une bande tressée.

9. Bande selon la revendication 7, dans laquelle ledit manchon est une bande tricotée.

10. Bande selon la revendication 7, dans laquelle ladite bande est une bande tissée.

11. Bande selon la revendication 1, caractérisée en ce que ladite bande est une bande tissée comportant une trame de fils monofilaments, les moyens de fixation du type crochets comprenant des crochets (22) formés d'un seul tenant avec les extrémités des fils de trame monofilaments exposés au premier bord marginal de la bande.

12. Bande selon la revendication 4, caractérisée en ce que ladite bande est enroulée sous la forme d'un rouleau, les moyens de fixation dudit ruban à crochets de fixation et ladite surface de fil le long dudit premier bord marginal étant positionnés l'un par rapport à l'autre de manière à s'engager mutuellement de sorte que la bande résiste au déroulement.

13. Bande selon l'une quelconque des revendications 1 à 12 sous la forme d'un manchon pour la protection de supports allongés, dans laquelle ledit manchon est composé d'un matériau filamentaire entrelacé et est caractérisé en ce qu'un bord marginal est composé d'une bande de gros fil de chaîne multifilament (13) exposée sur la surface interne et la surface externe dudit manchon et de moyens de fixation du type crochets (15, 16, 22) s'étendant le long du bord marginal opposé dudit manchon, lesdits moyens de fixation du type crochets pouvant être engagés avec le gros fil (13) afin de fermer le manchon autour des supports allongés.

14. Bande sous la forme d'un manchon selon la revendication 13, caractérisée en ce que ledit manchon comporte une seconde bande de gros fil s'étendant sur le bord marginal comportant lesdits moyens de fixation du type crochets sur la surface du manchon à l'opposé de la surface comportant les moyens de fixation, le manchon étant enroulé sous la forme d'un rouleau compact avec les moyens de fixation du type crochets (15) et le gros fil (13) retenant élastiquement le manchon sous ladite forme de rouleau.

15. Bande selon la revendication 1, caractérisée en ce que ledit gros fil multifilament s'étend dans le sens de l'insertion (sens de la trame).

16. Bande selon la revendication 1, caractérisée en ce que ledit gros fil de chaîne multifilament est exposé dans une bande s'étendant dans le sens de la longueur du fil dudit second bord marginal sur la surface interne et la surface externe dudit manchon pour attachement par les moyens de fixation du type crochets alternativement avec la surface interne de la bande ou avec la surface externe de la bande.

17. Bande selon la revendication 16, caractérisée en ce que lesdits moyens de fixation du type crochets comprennent un ruban à crochets de fixation fixé le long dudit premier bord marginal.

18. Bande selon la revendication 15 sous la forme d'un manchon pour la protection de supports allongés, ledit manchon comprenant un matériau filamentaire entrelacé comprenant un gros fil multifilament dans le sens de l'insertion (sens de la trame), caractérisée en ce que ledit gros fil multifilament est relativement exposé et non contraint dans une première bande s'étendant le long d'un bord marginal dudit manchon; une bande de ruban à moyens de fixation du type crochets s'étendant le long du bord marginal opposé dudit manchon, ledit ruban à moyens de fixation du type crochets comportant un ensemble de crochets individuels en projection depuis la surface du manchon; lesdits crochets pouvant être engagés avec les filaments dudit gros fil afin de fermer le manchon autour des supports allongés.

19. Bande tissée sous la forme d'un manchon selon la revendication 18, caractérisée en ce que le manchon est tissé.

20. Manchon tissé selon la revendication 19, caractérisé en ce que ledit matériau filamentaire comprend des fils de chaîne monofilaments entrelacés avec ledit gros fil multifilament.

21. Manchon tissé selon la revendication 20, caractérisé en ce que la densité des fils de chaîne monofilaments adjacents audit bord marginal est légèrement inférieure à la densité à l'extérieur de la première bande.

22. Manchon tissé selon la revendication 21, caractérisé en ce que les fils de chaîne monofilaments ont un diamètre d'environ 8 à environ 15 millièmes de pouce et ledit gros fil à un denier d'environ 600 à 2500 et est composé d'environ 70 à 450 filaments.

23. Bande selon la revendication 18, caractérisée en ce que ledit manchon est une bande tricotée.
